# EUROPEAN PATENT SPECIFICATION

(11) **EP 1 717 444 B1**
(45) Date of publication and mention of the grant of the patent: **01.08.2007**
(21) Application number: 06112612.4
(22) Date of filing: 13.04.2006
(51) Int. Cl.: F04B 27/18, F16K 1/54

(54) **Displacement control valve for clutchless type variable displacement compressor**
Steuerungsventil für einen getriebelosen Verdichter mit variabler Fördermenge
Soupape de réglage pour un compresseur à débit variable sans embrayage

(30) Priority: 26.04.2005 JP 2005127236; 08.07.2005 JP 2005200315
(43) Date of publication of application: 02.11.2006
(73) Proprietor: KABUSHIKI KAISHA TOYOTA JIDOSHOKKI, Kariya-shi, Aichi 448-8761 (JP)
(72) Inventor: Umemura, Satoshi, Kariya-shi Aichi 448-8671 (JP); Ota, Masaki, Kariya-shi Aichi 448-8671 (JP); Fukanuma, Tetsuhiko, Kariya-shi Aichi 448-8671 (JP); Hashimoto, Yuji, Kariya-shi Aichi 448-8671 (JP); Okuda, Motoaki, Kariya-shi Aichi 448-8671 (JP)
(74) Representative: TBK-Patent

(56) References cited:
- EP-A- 0 714 004
- EP-A- 1 236 899
- EP-A- 1 507 109
- FR-A- 2 821 127
- US-A- 6 010 312

## Description

### BACKGROUND OF THE INVENTION

The present invention relates to a displacement control valve for a clutchless type variable displacement compressor for use in a vehicle air conditioner which variably controls its displacement.

Generally, a variable displacement compressor (hereinafter merely referred to as "compressor") is known as a compressor for use in a vehicle air conditioner, which variably controls its displacement. In this type of compressor, a swash plate is accommodated in a control pressure chamber and inclinable with respect to a drive shaft. As the pressure in the control pressure chamber rises, the swash plate is inclined so as to approach a state perpendicular to the axis of the drive shaft (inclination of the swash plate becomes small). On the other hand, as the pressure in the control pressure chamber falls, the swash plate is inclined so as to approach the axis of the drive shaft (the inclination of the swash plate becomes large). The compressor has a piston whose stroke is changeable in accordance with the inclination of the swash plate. For example, when the pressure in the control pressure chamber is high and the inclination of the swash plate is small, the stroke of the piston is small. On the other hand, when the pressure in the control pressure chamber is low and the inclination of the swash plate is large, the stroke of the piston is large. As the stroke of the piston decreases, the displacement of the compressor is decreased. As the stroke of the piston increases, the displacement of the compressor is increased.

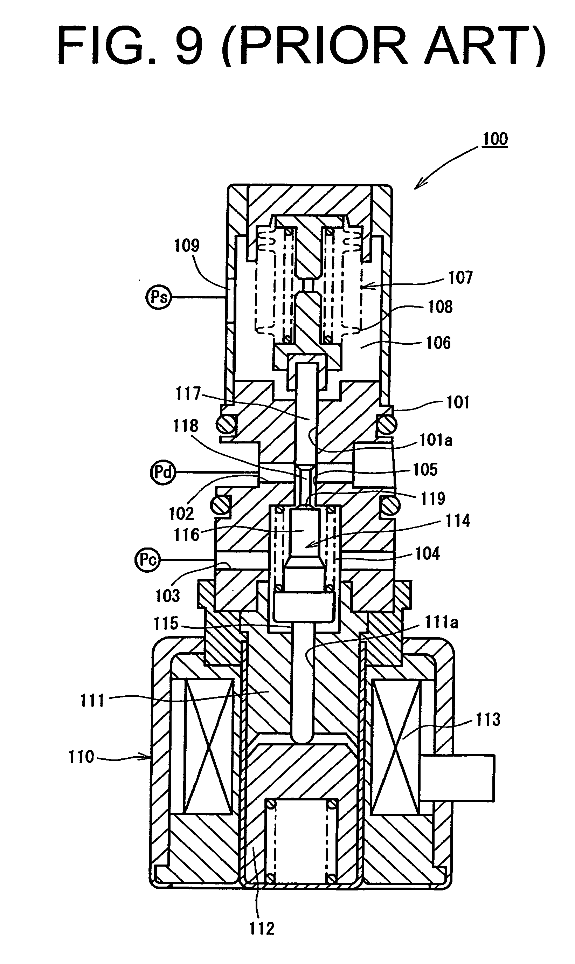

Japanese Unexamined Patent Application Publication (KOKAI) No. 2000-18420 discloses a displacement control valve for a variable displacement compressor. FIG. 9 shows a displacement control valve 100 for the compressor, which is capable of controlling an amount of refrigerant supplied from a discharge chamber to a control pressure chamber. The displacement control valve 100 includes a valve housing 101 having a first port 102 in communication with a discharge pressure region and a second port 103 in communication with the control pressure chamber. The first port 102 is exposed to pressure Pd of the discharge pressure region and the second port 103 is exposed to pressure Pc of the control pressure chamber. The valve housing 101 has a refrigerant passage through which the first port 102 is in communication with the second port 103. The refrigerant passage includes a valve chamber 104 formed in the valve housing 101 so as to be in communication with the second port 103 and a valve hole 105 formed between the valve chamber 104 and the first port 102. The displacement control valve 100 has at one end of the valve housing 101 a pressure sensing chamber 106, which accommodates therein a pressure sensing mechanism 107 having a bellows 108. The pressure sensing chamber 106 is in communication with a suction pressure region through a pressure detecting port 109 formed in the valve housing 101. The pressure sensing chamber 106 is exposed to pressure Ps of the suction pressure region.

A solenoid 110 is provided in a part of the valve housing 101 which is the furthest from the pressure sensing chamber 106 (at the other end of the valve housing 101). The solenoid 110 has a fixed core 111 fixed to the valve housing 101, a movable core 112 movable with respect to the fixed core 111 and an electromagnetic coil 113 enclosing the fixed and movable cores 111 and 112. The fixed core 111 has a hole 111a formed therein, through which a rod 114 that serves as a reciprocation body is inserted. The rod 114 also extends through the valve hole 105. One end of the rod 114 is in contact with the movable core 112, and the other end thereof is connected to the pressure sensing mechanism 107 in the pressure chamber 106.

The rod 114 includes a first shaft portion 115 having a valve body 116 for closing the valve hole 105, a second shaft portion 117 inserted in a hole 101 a through which the pressure sensing chamber 106 is in communication with the refrigerant passage, and a small-diameter portion 118 that connects the first shaft portion 115 to the second shaft portion 117. A projection portion 119 is formed between the first shaft portion 115 and the small-diameter portion 118 so as to be tapered toward the small-diameter portion 118. The projection portion 119 is substantially in the shape of truncated cone and has a tapered surface in accordance with the tapered shape. The smallest diameter of the projection portion 119 (the diameter of the part thereof connected to the small-diameter portion 118) corresponds to the diameter of the small-diameter portion 118. The valve body 116 of the first shaft portion 115 is a valve body for opening and closing the valve hole 105. When the valve body 116 opens the valve hole 105, the refrigerant flows from the discharge pressure region into the control pressure chamber through the first port 102, the refrigerant passage and the second port 103. When the valve body 116 closes the valve hole 105, flow of the refrigerant from the discharge pressure region into the control pressure chamber is prevented.

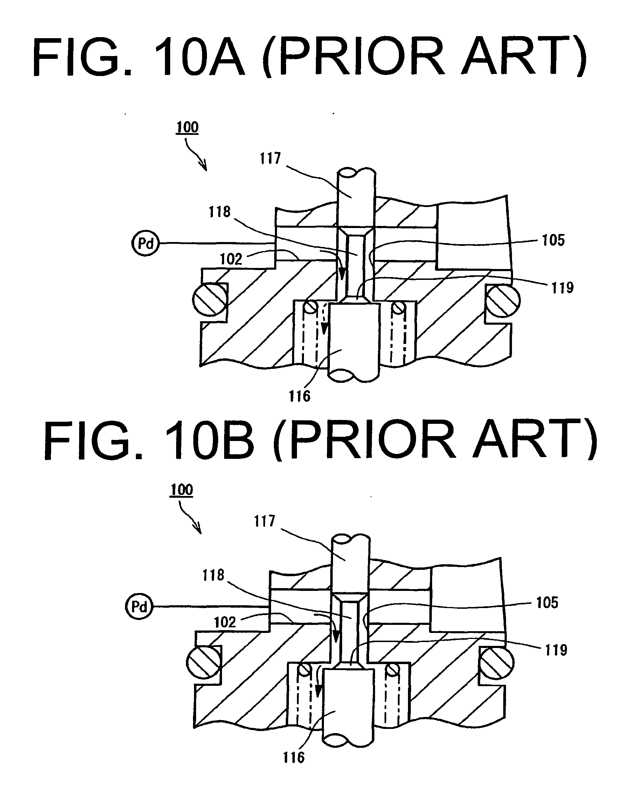

When the solenoid 110 of the above displacement control valve 100 is excited to move the rod 114 in the direction that causes the valve hole 105 to be closed as shown in FIG. 10A, the amount of the refrigerant flowing from the discharge pressure region into the control pressure chamber is decreased, which increases the inclination of the swash plate with fall of the pressure in the control pressure chamber. On the other hand, when the solenoid 110 is unexcited, the valve body 116 is moved away from the valve hole 105 as shown in FIG. 10B, so that the amount of the refrigerant flowing from the discharge pressure region into the control pressure chamber is increased, which decreases the inclination of the swash plate with rise of the pressure in the control pressure chamber. It is noted that when the valve body 116 opens and closes the valve hole 105, the projection portion 119 provided in the rod 114 gradually changes the cross-sectional area of the valve hole 105. This prevents the supply of high pressure refrigerant into the control pressure chamber from being rapidly started and stopped, thereby stabilizing the controllability of the displacement of the compressor.

In a clutchless type compressor that constantly receives power from an external drive source (e.g. a vehicle engine) so as to operate even at minimum displacement, the sufficient amount of the refrigerant flowing from the discharge pressure region into the control pressure chamber through the displacement control valve is needed in order to ensure sufficient lubrication in the compressor at the minimum displacement. Thus, the clearance between the circumferential surface of the rod and the inner circumferential surface of the valve hole, which is a part of the refrigerant passage, needs to be increased at the minimum displacement of the compressor.

Meanwhile, in a control region in which displacement of the compressor is varied, if the flow rate of the refrigerant from the discharge pressure region into the control pressure chamber is large, the variation of the flow rate of the refrigerant is significantly large when the rod opens the valve hole. This causes rapid change of the pressure in the control pressure chamber, with the result that the displacement controllability deteriorates.

The rod of the conventional displacement control valve has the projection portion tapered toward the small-diameter portion. Thus, the cross-sectional area of the valve hole is gradually changed by the projection portion, thereby gradually changing the flow rate of the refrigerant in the valve hole. In this respect, the conventional displacement control valve is advantageous. However, in order to gradually change the flow rate of the refrigerant in the valve hole, the angle of the tapered surface of the projection portion with respect to the axis of the rod needs to be set in a certain range. The length of the projection portion in the axial direction of the rod is set in accordance with the angle of the tapered surface. For processing reason, the sufficient length of the projection portion in the axial direction of the rod is needed for forming the tapered surface in the projection portion. More specifically, since the projection portion is formed in the rod, the distance of movement of the rod, which is moved by exciting the solenoid, needs to be set larger than the length of the projection portion in the axial direction of the rod in order to ensure the sufficient amount of the refrigerant required for lubrication in the compressor at the minimum displacement. When the distance of movement of the rod that serves as a reciprocation body is set large, magnetic force of the solenoid needs to be large, which is opposed to reduction of the displacement control valve in size and electric power saving.

Incidentally, in order to shorten the distance of movement of the rod, the angle of the tapered surface with respect to the direction of movement needs to be increased. There is fear that as the angle of the tapered surface increases, the flow rate of the refrigerant may extremely rapidly change when the rod opens the valve hole. Thus, the pressure in the control pressure chamber may rapidly change, thereby deteriorating the displacement controllability. Although there is a way of increasing the diameter of the small-diameter portion, the increase of the diameter of the small-diameter portion decreases the clearance between the small-diameter portion and the valve hole, which makes impossible to ensure the sufficient flow rate of the refrigerant when the valve body opens the valve hole.

When the refrigerant of the compressor is carbon dioxide, the difference of elevation of the pressure of the refrigerant becomes remarkable compared to that of the other refrigerant. This enables a sufficient flow rate of the refrigerant for controlling the compressor to be flowed into the valve hole by slightly spacing the valve body away from the valve hole. That is, when the refrigerant is carbon dioxide, the distance of movement of the rod of the displacement control valve is set small. If the tapered projection portion is provided in the rod, however, the distance of movement of the rod is increased by the length in the axial direction of the projection portion. In addition, since inflow and interruption of the refrigerant from the discharge pressure region to the control pressure chamber through the valve hole is achieved by substantially slight distance of movement of the rod, the function that the flow rate of the refrigerant is gradually changed caused by the conventional projection portion may not be properly achieved when the refrigerant is carbon dioxide. Furthermore, when the refrigerant is carbon dioxide, in addition to the shortening of the distance of movement of the rod, the amount of the refrigerant flowing from the discharge pressure region to the control pressure chamber in moving the rod in the direction that causes the valve hole to be closed needs to be reliably decreased to reliably suppress the flow rate of the refrigerant which passes through the valve hole.

Variable displacement compressors having the technical features as defined in the pre-characterizing portion of claim 1 are e.g. known from document FR 2 821 127 A1.

The present invention is directed to a displacement control valve capable of shortening distance of movement of a reciprocation body having a valve body, and of reliably suppressing flow rate of refrigerant which passes through a valve hole in a control region, and of sufficiently performing lubrication in a compressor by ensuring the flow rate of refrigerant which passes through the valve hole at the minimum displacement of the compressor.

### SUMMARY

The present invention provides a displacement control valve for a clutchless type variable displacement compressor connected to an external refrigerant circuit. The compressor has a control pressure chamber. The compressor and the external refrigerant circuit have a discharge pressure region. The displacement control valve includes a first port, a second port, a refrigerant passage, a valve hole, a reciprocation body, a pressure sensing mechanism and a solenoid. The first port is in communication with the discharge pressure region. The second port is in communication with the control pressure chamber. The refrigerant passage connects the first port to the second port. The valve hole is provided in the refrigerant passage. The reciprocation body has a valve body for opening and closing the valve hole. The reciprocation body includes a first shaft portion that has the valve body and a second shaft portion that is coaxial with the first shaft portion and inserted in the valve hole. The pressure sensing mechanism moves the reciprocation body in a direction that causes the valve hole to be opened in accordance with pressure in the discharge pressure region. The solenoid urges the reciprocation body in a direction that causes the valve hole to be closed. The first shaft portion is located adjacent to the solenoid. The second shaft portion is connected to the pressure sensing mechanism. The second shaft portion and the valve hole define a flow path in which refrigerant freely flows. A throttle portion is formed between the first and second shaft portions and coaxial with the first and second shaft portions. The throttle portion is insertable into the valve hole when the rod is reciprocated. Diameter of an end of the throttle portion adjacent to the second shaft portion is set larger than that of the second shaft portion adjacent to the throttle. Flow rate of the refrigerant in the flow path is suppressed by the throttle portion.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a longitudinal cross sectional view schematically showing a compressor according to a first embodiment;
FIG. 2 is a longitudinal cross sectional view schematically showing a displacement control valve according to the first embodiment;
FIG. 3 is a partial sectional view showing a throttle portion of the displacement control valve according to the first embodiment;
FIG. 4A is a graph for specifying the shape of the throttle portion according to the first embodiment;
FIG. 4B is a sectional view showing the throttle portion according to the first embodiment;
FIG. 4C is a sectional view showing a prior art throttle portion;
FIG. 4D is a sectional view showing a prior art throttle portion;
FIG. 5A is a partial sectional view for explaining operation of the displacement control valve according to the first embodiment;
FIG. 5B is a partial sectional view for explaining operation of the displacement control valve according to the first embodiment;
FIG. 6 is a partial sectional view showing a throttle portion of a displacement control valve according to a second embodiment;
FIG. 7A is a partial sectional view for explaining operation of the displacement control valve according to the second embodiment;
FIG. 7B is a partial sectional view for explaining operation of the displacement control valve according to the second embodiment;
FIG. 8 is a partial sectional view showing a throttle portion of a displacement control valve according to a third embodiment;
FIG. 9 is a longitudinal cross sectional view schematically showing a prior art displacement control valve;
FIG. 10A is a partial sectional view for explaining operation of the prior art displacement control valve; and
FIG. 10B is a partial sectional view for explaining operation of the prior art displacement control valve.

### DETAILED DESCRIPTION OF THE PREFERRED EMBODIMENTS

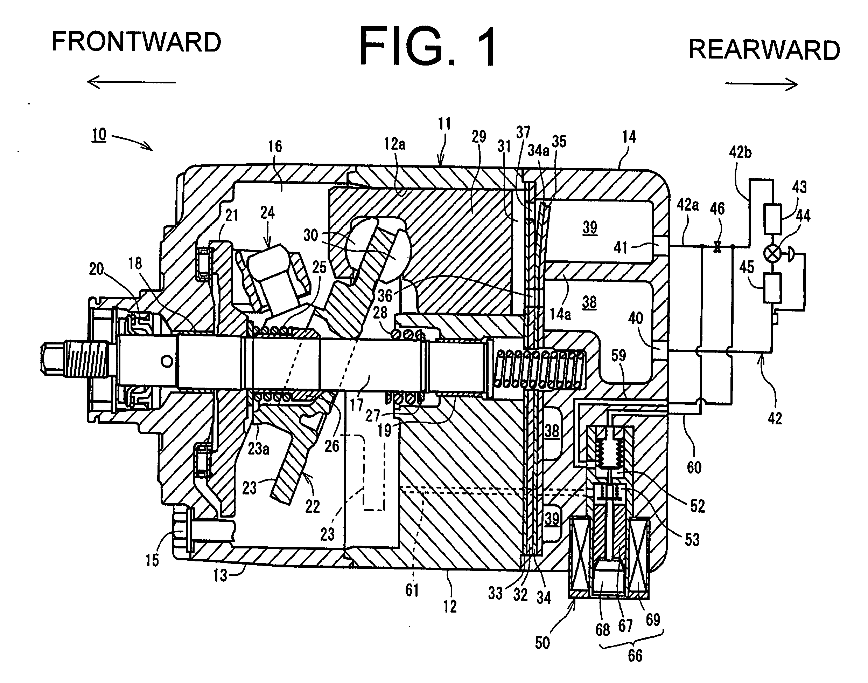

The following will describe a displacement control valve for a clutchless type variable displacement compressor (hereinafter merely referred to as "displacement control valve") according to a first embodiment of the present invention with reference to FIGS. 1 through 3, 4A through 4D, 5A and 5B. First of all, an outline of the clutchless type variable displacement compressor (hereinafter merely referred to as "compressor") according to the first embodiment will now be described. Referring to FIG. 1, a compressor 10 includes a housing 11, which forms its configuration. The housing 11 includes a cylinder block 12 having a plurality of cylinder bores 12a formed therein, a front housing 13 which is joined to the front end of the cylinder block 12, and a rear housing 14 which is joined to the rear end of the cylinder block 12. A bolt 15 is passed through the front housing 13, the cylinder block 12 and the rear housing 14 to tighten those components in the axial direction of the bolt 15, so that those components are integrally fixed to form the housing 11.

The front housing 13 has a control pressure chamber 16 formed therein, whose rear end is closed by the cylinder block 12. A drive shaft 17 is freely rotatably supported by a radial bearing 18 provided in the front housing 13 and a radial bearing 19 provided in the cylinder block 12 so as to extend through the vicinity of the center of the control pressure chamber 16. A sealing mechanism 20 is provided in front of the radial bearing 18 which supports the front part of the drive shaft 17 so as to keep in slide contact with the circumferential surface of the drive shaft 17. The sealing mechanism 20 has a lip seal member and the like to prevent refrigerant in the control pressure chamber 16 from leaking through the clearance between the front housing 13 and the drive shaft 17.

The front end of the drive shaft 17 is connected to an external drive source (not shown) through a power transmission mechanism (not shown). The power transmission mechanism is a clutchless mechanism provided by a combination of a belt and a pulley, which enables power to be continuously transmitted.

A lug plate 21 is fixedly mounted on the drive shaft 17 in the control pressure chamber 16, which enables the lug plate 21 to be integrally rotated with the drive shaft 17. A swash plate 23 which forms a displacement changing mechanism 22 is supported by the drive shaft 17 in the rear of the lug plate 21 so as to be capable of sliding along and of inclining relative to the axial direction of the drive shaft 17. A hinge mechanism 24 is interposed between the swash plate 23 and the lug plate 21, through which the swash plate 23 is connected to the lug plate 21 and the drive shaft 17 so as to be capable of synchronously rotating with and of inclining relative to the lug plate 21 and the drive shaft 17.

A coil spring 25 is wound around a part of the drive shaft 17 between the lug plate 21 and the swash plate 23, and pushing force thereof urges a tubular body 26 freely slidably fitted on the drive shaft 17 rearward. The swash plate 23 is continuously pushed rearward, or in a direction of decrease of inclination of the swash plate 23, by the tubular body 26 urged by the coil spring 25. It is noted that inclination of the swash plate 23 means an angle made by a plane perpendicular to the drive shaft 17 and the plane of the swash plate 23. A stopper portion 23a projects from the front face of the swash plate 23. When the stopper portion 23a is in contact with the lug plate 21 as shown in FIG. 1, maximum inclination of the swash plate 23 is regulated. A retaining ring 27 is fitted on a part of the drive shaft 17 in the rear of the swash plate 23, and a coil spring 28 is wound around a part of the drive shaft 17 in front of the retaining ring 27. When the swash plate 23 is in contact with the front end of the coil spring 28, minimum inclination of the swash plate 23 is regulated.

Each cylinder bore 12a of the cylinder block 12 has a single-headed piston 29 disposed therein so as to be capable of reciprocating therein. A neck portion of each piston 29 engages with the periphery of the swash plate 23 through a pair of shoes 30. As the swash plate is rotated with the rotation of the drive shaft 17, each piston 29 is reciprocated through the corresponding pair of shoes 30.

On the other hand, as shown in FIG. 1, the front end of the rear housing 14 is joined to the rear end of the cylinder block 12. A valve plate 32, valve body forming plates 33, 34, and a retainer 35 are interposed between the rear housing 14 and the cylinder block 12. The rear housing 14 is a rear component of two housing components which are joined to the cylinder block 12, and a suction chamber 38 is formed at the center of the rear housing 14. The suction chamber 38 is in communication with compression chambers 31 in the cylinder bores 12a through suction ports 36 provided in the valve plate 32, respectively. Also, a discharge chamber 39 is formed in the rear housing 14 so as to surround the suction chamber 38. The discharge chamber 39 is separated from the suction chamber 38 by a partition wall 14a.

The valve plate 32 forms the compression chambers 31 in the cylinder bores 12a together with the pistons 29, respectively. The valve plate 32 also has the suction ports 36 in communication with the suction chamber 38 in the rear housing 14 and the discharge ports 37 in communication with the discharge chamber 39 in the rear housing 14. The valve body forming plate 33 is a suction valve forming plate which forms suction valves (not shown) interposed between the compression chambers 31 and the suction chamber 38. On the other hand, the valve body forming plate 34 is a discharge valve forming plate which forms reed type discharge valves 34a interposed between the discharge ports 37 and the discharge chamber 39. The retainer 35 regulates maximum opening of each discharge valve 34a.

Incidentally, while the piston 29 is moved from its top dead center to its bottom dead center, the refrigerant in the suction chamber 38 is introduced into its compression chamber 31 through its suction port 36 and its suction valve. While the piston 29 is moved from its bottom dead center to its top dead center, the refrigerant introduced into the compression chamber 31 is compressed to a predetermined pressure and then discharged into the discharge chamber 39 through its discharge port 37 and its discharge valve 34a. The inclination of the swash plate 23 is determined on the basis of the balance between moments such as moment of rotational movement caused by centrifugal force of the swash plate 23, moment caused by inertia force of the reciprocation of each piston 29, moment caused by pressure of the refrigerant, and the like. The moment caused by pressure of the refrigerant is moment generated on the basis of the correlation between the pressure in each compression chamber 31 and the pressure in the control pressure chamber 16 which is applied to the back surface of each piston 29, and is applied to the swash plate 23 in the direction of increase or decrease of inclination in accordance with fluctuation of the pressure in the control pressure chamber 16.

An external refrigerant circuit will now be described. The suction chamber 38 is connected to an external refrigerant circuit 42 through an inlet 40 formed in the rear housing 14, and the refrigerant in the external refrigerant circuit 42 is supplied to the suction chamber 38 through the inlet 40. In the present embodiment, the suction chamber 38 and the inlet 40 are included in a suction pressure region. Also, the discharge chamber 39 is connected to the external refrigerant circuit 42 through an outlet 41 formed in the rear housing 14, and the refrigerant in the discharge chamber 39 is supplied to the external refrigerant circuit 42 through the outlet 41. The external refrigerant circuit 42 includes a condenser 43 which absorbs heat from the refrigerant, an expansion valve 44 and an evaporator 45 which transfers heat to the refrigerant.

The expansion valve 44 is a temperature sensing type automatic expansion valve for controlling flow rate of the refrigerant in accordance with temperature fluctuation of the refrigerant downstream from the evaporator 45. A throttle 46 is provided in a part of the external refrigerant circuit 42 downstream from the outlet 41 and upstream from the condenser 43. In the present embodiment, for the sake of convenience, a part of the external refrigerant circuit 42 between the outlet 41 and the throttle 46 is an upstream circuit 42a on the discharge side of the external refrigerant circuit 42, and a part of the external refrigerant circuit 42 between the throttle 46 and the condenser 43 is a downstream circuit 42b on the discharge side of the external refrigerant circuit 42. In the present embodiment, the discharge chamber 39, the upstream circuit 42a and the downstream circuit 42b are included in a discharge pressure region.

In the first embodiment, the compressor 10 uses a displacement control valve 50 to adjust the pressure in the control pressure chamber 16, thereby to appropriately change the moment caused by pressure of the refrigerant. This enables inclination of the swash plate 23 to be set at an optional angle between the minimum inclination and the maximum inclination.

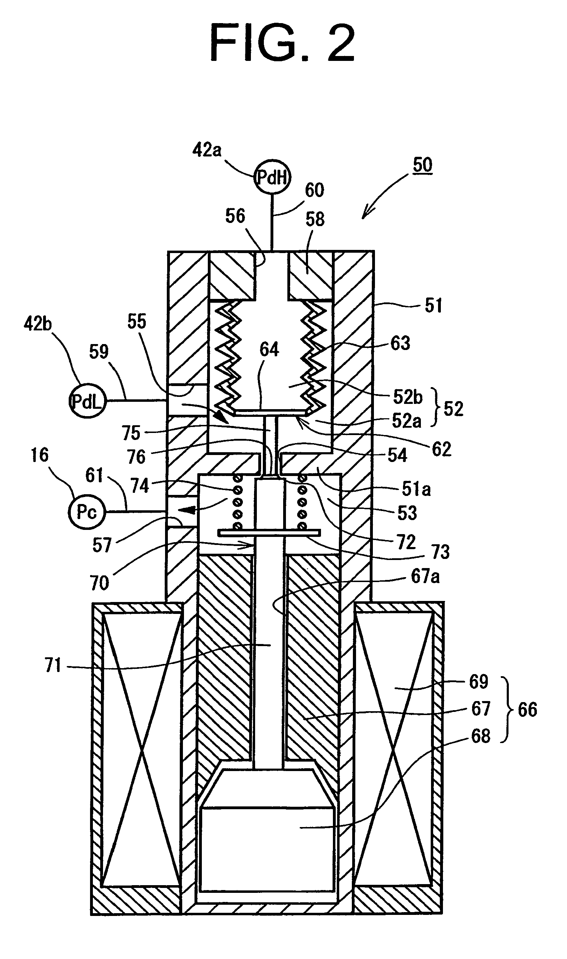

As shown in FIG. 1, the rear housing 14 has the displacement control valve 50 therein for supplying the refrigerant in the discharge pressure region to the control pressure chamber 16. As shown in FIG. 2, the displacement control valve 50 mainly includes a substantially tubular valve housing 51 having a plurality of chambers therein, a solenoid 66 connected to the valve housing 51, a rod 70 that serves as a reciprocation body having a valve body 72, and a pressure sensing mechanism 62 which moves the rod 70 in an opposite direction from a direction of movement of the rod 70 moved by exciting the solenoid 66.

The valve housing 51 has a pressure sensing chamber 52 and a valve chamber 53 formed therein. The pressure sensing chamber 52 is located on one end of the valve housing 51, and the valve chamber 53 is located next to the pressure sensing chamber 52. A partition wall 51a which has a valve hole 54 formed therethrough is formed between the pressure sensing chamber 52 and the valve chamber 53 to separate the pressure sensing chamber 52 from the valve chamber 53. The valve housing 51 also has a first pressure sensing chamber port 55 that serves as a first port, and a valve chamber port 57 that serves as a second port formed therein. The pressure sensing chamber 52 is in communication with the downstream circuit 42b through the first pressure sensing chamber port 55. The valve chamber 53 is in communication with the control pressure chamber 16 through the valve chamber port 57. In addition, as shown in FIG. 2, an end wall member 58 which has a second pressure sensing chamber port 56 formed therethrough is formed on the upper end of the pressure sensing chamber 52, and the upstream circuit 42a is in communication with the pressure sensing chamber 52 through the second pressure sensing chamber port 56.

The valve housing 51 has a supply passage formed therein ranging from the first pressure sensing chamber port 55 to the valve chamber port 57 through the valve hole 54. The supply passage serves as a refrigerant passage. That is, the supply passage formed between the first pressure sensing chamber port 55 and the valve chamber port 57 includes a low-pressure chamber 52a which is a part of the pressure sensing chamber 52, the valve chamber 53 and the valve hole 54. The first pressure sensing chamber port 55 is in communication with the downstream circuit 42b through a passage 59 and is exposed to pressure PdL of the downstream circuit 42b. The second pressure sensing chamber port 56 is in communication with the upstream circuit 42a through a passage 60 and is exposed to pressure PdH of the upstream circuit 42a. The valve chamber port 57 is in communication with the control pressure chamber 16 through a passage 61 and is exposed to pressure Pc of the control pressure chamber 16. Incidentally, while the pressure of the refrigerant in the discharge chamber 39 and the upstream circuit 42a is high, the pressure of the refrigerant is decreased in order of the downstream circuit 42b, the control pressure chamber 16 and the suction chamber 38. It is noted that when the compressor 10 is operated at maximum displacement, the suction chamber 38 has the same pressure as the control pressure chamber 16.

The pressure sensing chamber 52 accommodates the pressure sensing mechanism 62 therein. The pressure sensing mechanism 62 has a bellows 63 which divides the pressure sensing chamber 52 into the low-pressure chamber 52a and a high-pressure chamber 52b. A fixed end of the bellows 63 is fixed to the end wall member 58. The pressure sensing chamber 52 has the high-pressure chamber 52b formed inside the bellows 63, and the high-pressure chamber 52b is in communication with the second pressure sensing chamber port 56. The pressure sensing chamber 52 also has the low-pressure chamber 52a formed outside the bellows 63, and the low-pressure chamber 52a is in communication with the first pressure sensing chamber port 55. A movable member 64 is mounted on a movable end of the bellows 63. The pressure differential between the high-pressure chamber 52b and the low-pressure chamber 52a gives force in a direction of extension of the bellows 63 to the movable member 64. Therefore, when the pressure differential between the high-pressure chamber 52b and the low-pressure chamber 52a exists, the force in a direction of extension of the bellows 63 is given to the movable member 64.

The solenoid 66 is connected to an end of the valve housing 51 adjacent to the valve chamber 53, or the other end of the valve housing 51. The solenoid 66 has a fixed core 67 which faces the valve chamber 53, and the fixed core 67 seals the other end of the valve housing 51. The solenoid 66 also has a movable core 68 which faces the fixed core 67, and an electromagnetic coil 69 which is formed so as to enclose the fixed core 67 and the movable core 68. The fixed core 67 has a hole 67a formed through the center thereof, and the hole 67a has a larger diameter than the valve hole 54. The axial center of the hole 67a is coaxial with that of the valve hole 54. The fixed core 67 attracts the movable core 68 by excitation by current supply to the electromagnetic coil 69. The solenoid 66 is controlled by a current supply control (a duty cycle control) based on a duty ratio of a control unit (not shown).

The rod 70 will now be described. In the first embodiment, the rod 70 mainly includes a first shaft portion 71 and a second shaft portion 72, and is disposed in the valve housing 51. The first shaft portion 71 is a round bar, and corresponds to a part of the rod 70 located from the solenoid 66 to the valve chamber 53. The first shaft portion 71 has a larger diameter than the valve hole 54. In the present embodiment, most of the first shaft portion 71 is located in the hole 67a of the fixed core 67 so as to slide along the hole 67a. An end of the first shaft portion 71 adjacent to the solenoid 66 is connected to the movable core 68. Since the diameter of the first shaft portion 71 is set larger than that of the valve hole 54, an end of the first shaft portion 71 adjacent to the valve hole 54 includes the valve body 72 that serves as a valve for opening and closing the valve hole 54. That is, when the first shaft portion 71 including the valve body 72 is in contact with the partition wall 51 a which faces the valve chamber 53, the valve hole 54 is closed. Also, when the contact between the first shaft portion 71 and the partition wall 51 a is released, the valve hole 54 is opened.

A spring acceptor 73 having a flanged shape is mounted on the first shaft portion 71 so as to locate in the valve chamber 53, and a coil spring 74 is interposed between the spring acceptor 73 of the first shaft portion 71 and the partition wall 51 a. When the movable core 68 is not operated by excitation of the electromagnetic coil 69, the coil spring 74 is capable of moving the rod 70 toward the solenoid 66. That is, the coil spring 74 gives the first shaft portion 71 urging force in a direction that causes the movable core 68 to be spaced away from the fixed core 67 through the spring acceptor 73. The end of the first shaft portion 71 which faces the valve hole 54 is connected to the second shaft portion 75 through a throttle portion 76. The second shaft portion 75 is a round bar and is coaxial with the first shaft portion 71. The second shaft portion 75 has a much smaller diameter than the valve hole 54 and extends through the valve hole 54 to be connected to the pressure sensing mechanism 62. Therefore, a clearance between the valve hole 54 and the second shaft portion 75 having an annular cross section forms a flow path when the valve body 72 opens the valve hole 54. The flow path forms a part of the refrigerant passage.

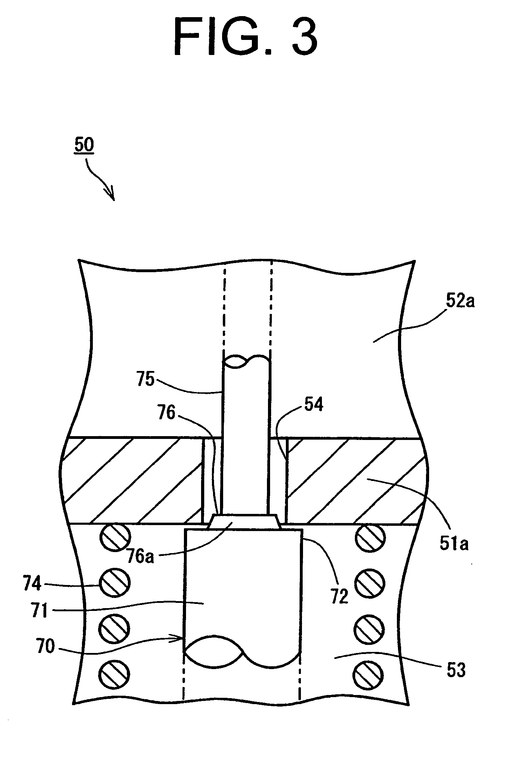

The throttle portion 76 will now be described. As shown in FIG. 3, the throttle portion 76 is formed between the first shaft portion 71 and the second shaft portion 75 of the rod 70. The throttle portion 76 is integrally formed with the first shaft portion 71 and the second shaft portion 75 to form a part of the rod 70. The throttle portion 76 has a truncated conical shape. The diameter of the end of the throttle portion 76 adjacent to the first shaft portion 71 is set smaller than that of the end of the first shaft portion 71 adjacent to the throttle portion 76, and is set slightly smaller than the inside diameter of the valve hole 54. Also, the diameter of the end of the throttle portion 76 adjacent to the second shaft portion 75 is set larger than the diameter of the second shaft portion 75, and is set much smaller than the inside diameter of the valve hole 54. That is, the throttle portion 76 is tapered from the first shaft portion 71 toward the second shaft portion 75, and the circumferential surface of the throttle portion 76 is a tapered surface 76a which inclines relative to the direction of movement of the rod 70. In addition, a radial step exists at the boundary of the throttle portion 76 and the second shaft portion 75. Therefore, the inclination of the tapered surface 76a which inclines relative to the direction of movement of the rod 70 is set to a gradual angle, regardless of the diameter of the second shaft portion 75. When the throttle portion 76 is inserted into the valve hole 54, flow rate of the refrigerant which passes through the valve hole 54 is adjusted. An effect to throttle the flow rate of the refrigerant which passes through the refrigerant passage by the throttle portion 76 is changed in accordance with the position of the tapered surface 76a relative to the valve hole 54.

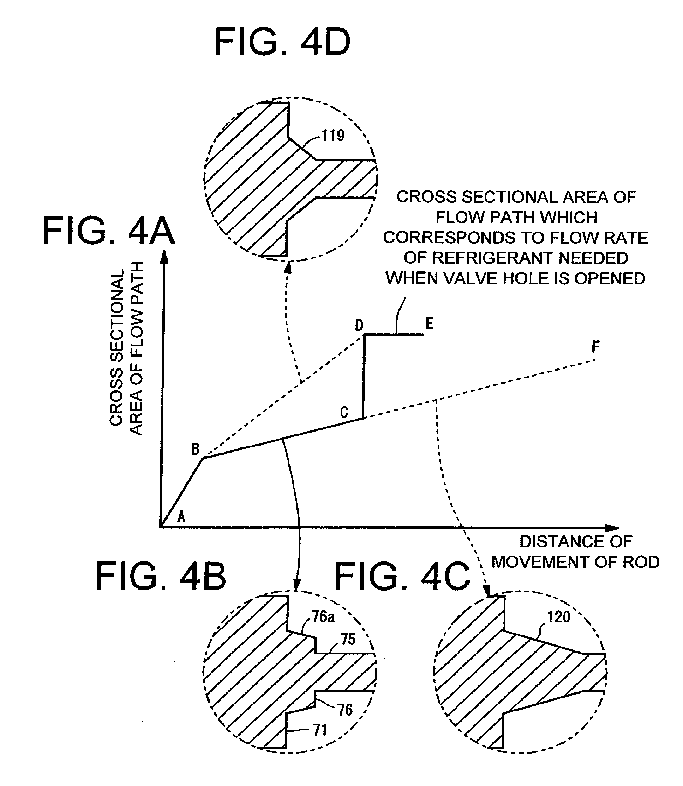

FIG. 4A is graph for specifying the shape of the throttle portion 76 of the first embodiment. If a distance of movement of the rod 70 is shown by the horizontal axis and a cross sectional area in the flow path is shown by the vertical axis, the shape of the throttle portion 76 (FIG. 4B) is specified by solid line connecting points A, B, C, D and E in FIG. 4A. That is, if a state where the valve body 72 closes the valve hole 54 is shown by the origin of the coordinates (the point A), when the valve body 72 opens the valve hole 54, the cross sectional area of the flow path is rapidly increased in accordance with the cross sectional area of a clearance between the valve body 72 and the partition wall 51 a as shown by the solid line AB. When the cross sectional area of the clearance between the valve body 72 and the partition wall 51 a exceeds the cross sectional area of a clearance between the tapered surface 76a of throttle portion 76 and the circumferential surface of the valve hole 54, the cross sectional area of the flow path depends on the clearance between the tapered surface 76a of throttle portion 76 and the circumferential surface of the valve hole 54 thereby to gradually increase the cross sectional area of the flow path in accordance with the shape of the tapered surface 76a as shown by the solid line BC. When the distance of movement from the origin (the point A) is increased to remove the throttle portion 76 from the valve hole 54 as shown by the solid line CD, the cross sectional area of the flow path becomes a maximum value provided by the inside diameter of the valve hole 54 and the diameter of the second shaft portion 75 as shown by the solid line DE. It is noted that the maximum value of the cross sectional area of the flow path shown by the solid line DE is set so as to ensure the flow rate of the refrigerant for sufficiently performing lubrication in the compressor 10 at the minimum displacement of the compressor 10. That is, the solid graph of FIG. 4A means that the cross sectional area of the flow path provided by the valve hole 54 and the second shaft portion 75 becomes a constant value when the throttle portion 76 having the tapered surface 76a gradually increases the cross sectional area of the flow path in accordance with the distance of movement of the rod 70 to exceed a specific distance of movement of the rod 70. Incidentally, the line connecting points A, B, C, F of FIG. 4A specifies the shape of a projection portion 120 having the conventional tapered surface (FIG. 4C). Also, the line connecting points A, B, D, E of FIG. 4A specifies the shape of the projection portion 119 having the conventional tapered surface (FIG. 4D). In the line connecting points A, B, C, F of FIG. 4A, although the projection portion 120 has a gradual tapered surface, the projection portion 120 lengthens the distance of movement of the rod 70. In the line connecting points A, B, D, E of FIG. 4A, on the other hand, although the projection portion 119 has a large inclination of the tapered surface and shortens the distance of movement of the rod 70, the projection portion 119 is easy to cause the flow rate of the refrigerant to be rapidly changed due to the large inclination of the tapered surface.

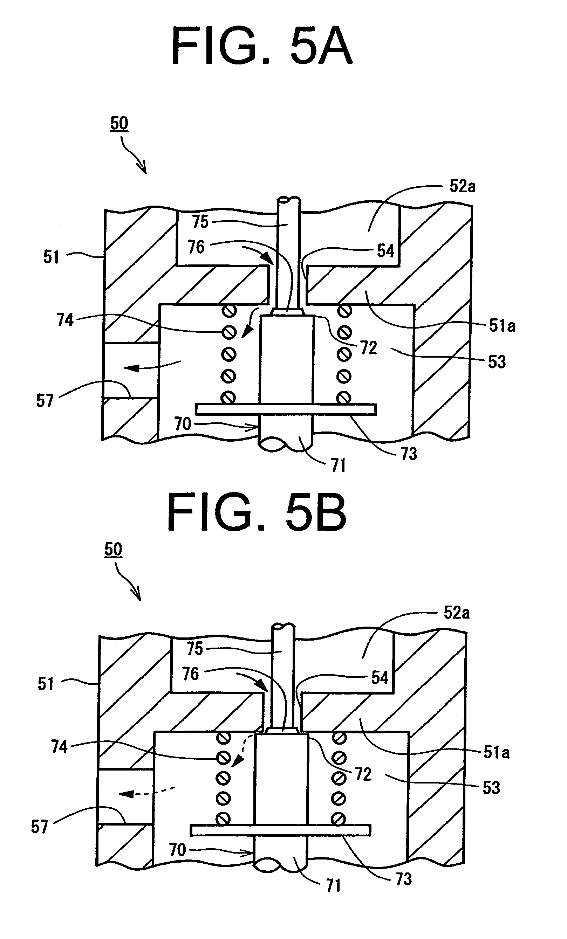

Meanwhile, as shown in FIG. 5B, in the state where the throttle portion 76 is inserted in the valve hole 54, a slight clearance is formed between the tapered surface 76a of the throttle portion 76 and the inside surface of the valve hole 54. An axial length of the throttle portion 76 is set to be shorter than the maximum distance of movement of the rod 70. It is noted that the maximum distance of movement of the rod 70 is provided by the position of the rod 70 where the solenoid 66 is not excited and the movable core 68 is spaced away from the fixed core 67 to the maximum and the position of the rod 70 where a current of a duty ratio of 100% is supplied to the solenoid 66 and the movable core 68 is approached to the fixed core 67 to the maximum (the position of the rod 70 where the valve body 72 is in contact with the partition wall 51 a to close the valve hole 54). When the rod 70 is reciprocated, the throttle portion 76 is inserted into or removed from the valve hole 54. When the rod 70 is inserted in the valve hole 54, the flow rate of the refrigerant which passes through a part of the flow path is throttled by the throttle portion 76. That is, the throttle portion 76 serves as a throttle in the flow path to suppress the flow rate in the flow path. In addition, since the diameter of the throttle portion 76 is reduced from the first shaft portion 71 toward the second shaft portion 75, maintenance of variable suppression of the flow rate by the throttle and release from the suppression are switched by inserting the throttle portion 76 into the valve hole 54 or removing the throttle portion 76 from the valve hole 54.

Operation of the displacement control valve of the present embodiment will now be described with reference to FIGS. 5A and 5B. FIG. 5A shows a state of the displacement control valve 50 where the movable core 68 is spaced away from the fixed core 67 to the maximum. In this state, the solenoid 66 is not excited and the rod 70 is moved toward the solenoid 66 by the urging force of the coil spring 74 and the pressure sensing mechanism 62. The valve body 72 of the rod 70 is spaced away from the partition wall 51 a to locate in the valve chamber 53 and the valve hole 54 is completely opened. At this time, a part of high-pressure refrigerant in the downstream circuit 42b is introduced into the low-pressure chamber 52a in the pressure sensing chamber 52 through the passage 59 and the first pressure sensing chamber port 55, and the refrigerant in the low-pressure chamber 52a passes through the flow path provided by the valve hole 54 and the second shaft portion 75 due to the opening state of the valve hole 54. The refrigerant which has passed through the flow path is introduced from the valve chamber 53 to the control pressure chamber 16 through the valve chamber port 57 and the passage 61. Since the high-pressure refrigerant is supplied into the control pressure chamber 16, the inclination of the swash plate 23 becomes a minimum state thereby to operate the compressor at the minimum displacement.

On the other hand, FIG. 5B shows a state of the displacement control valve 50 which is varying the displacement of the compressor 10. As external heat load such as temperature in a vehicle compartment rises, current is supplied into the solenoid 66 to excite the solenoid 66. The movable core 68 is approached to the fixed core 67 by the excitation of the solenoid 66 thereby to move the rod 70 toward the pressure sensing mechanism 62. Meanwhile, urging force is applied to the bellows 63 of the pressure sensing mechanism 62 in accordance with the pressure difference between the upstream circuit 42a and the downstream circuit 42b. The rod 70 is moved toward the pressure sensing mechanism 62 in accordance with the difference between the resultant force of the urging force of the bellows 63 and the urging force of the coil spring 74, and the exciting force of the solenoid 66. The valve body 72 of the first shaft portion 71 is approached to the partition wall 51a and at the same time the throttle portion 76 is approached to the valve hole 54 by the movement of the rod 70.

As shown in FIG. 5B, when the rod 70 is moved in the direction that causes the valve hole 54 to be closed to insert a part of the throttle portion 76 into the valve hole 54, a part of the cross sectional area in the flow path is reduced in accordance with the position of the tapered surface 76a of the throttle portion 76. In this case, the flow rate of the refrigerant flowing from the first pressure sensing chamber port 55 to the valve chamber port 57 through the valve hole 54 is throttled by the throttle portion 76 in the valve hole 54 thereby to sufficiently suppress the flow rate of the refrigerant. For example, although in the state where the throttle portion 76 is shallowly inserted in the valve hole 54 the flow rate of the refrigerant is throttled by the throttle portion 76, a certain amount of the refrigerant flows into the flow path due to a relatively large state of the cross sectional area of the flow path. Since in the state where the throttle portion 76 is deeply inserted in the valve hole 54 the cross sectional area of the flow path becomes a relatively small state, the flow rate of the refrigerant is sufficiently throttled by the throttle portion 76 thereby to decrease the amount of the refrigerant which passes through the flow path. As described above, the flow rate of the refrigerant which flows from the low-pressure chamber 52a to the valve chamber 53 through the flow path is decreased in accordance with the position of the tapered surface 76a, thereby to decrease the amount of refrigerant which is introduced from the displacement control valve 50 into the control pressure chamber 16. That is, when the amount of refrigerant which is introduced into the control pressure chamber 16 through the displacement control valve 50 is gradually decreased, the pressure in the control pressure chamber 16 is decreased to increase the inclination of the swash plate 23, which increases the displacement of the compressor 10.

The following will describe the case where the valve hole 54 is opened by the movement of the rod 70 from the state where the valve hole 54 is closed by the valve body 72. When the rod 70 is moved in the direction that causes the valve hole 54 to be opened, the valve body 72 is spaced away from the valve hole 54 thereby to gradually open the valve hole 54. When the valve body 72 begins to open the valve hole 54, since the throttle portion 76 is deeply inserted in the valve hole 54, the cross sectional area of the flow path is relatively in a small state. At this time, the flow rate of the refrigerant is sufficiently throttled by the throttle portion 76 and a small amount of the refrigerant passes through the flow path. The cross sectional area of the flow path provided by the valve hole 54 and the tapered surface 76a is gradually increased with the movement of the rod 70. Since the inclination of the tapered surface 76a which inclines relative to the direction of movement of the rod 70 is a gradual angle regardless of the diameter of the second shaft portion 75, the flow rate of the refrigerant is not rapidly changed in the process of increasing the cross sectional area of the flow path. When the throttle portion 76 is removed from the valve hole 54 by the additional movement of the rod 70, the cross sectional area of the flow path becomes the maximum value provided by the valve hole 54 and the second shaft portion 75 thereby to enable a sufficient amount of the refrigerant to flow through the valve hole 54. It is noted that an opening state or closing state of the valve hole 54 by the valve body 72 is mainly determined on the basis of the balance between the exciting force of the solenoid 66, the urging force of the coil spring 74 and the urging force of the pressure sensing mechanism 62.

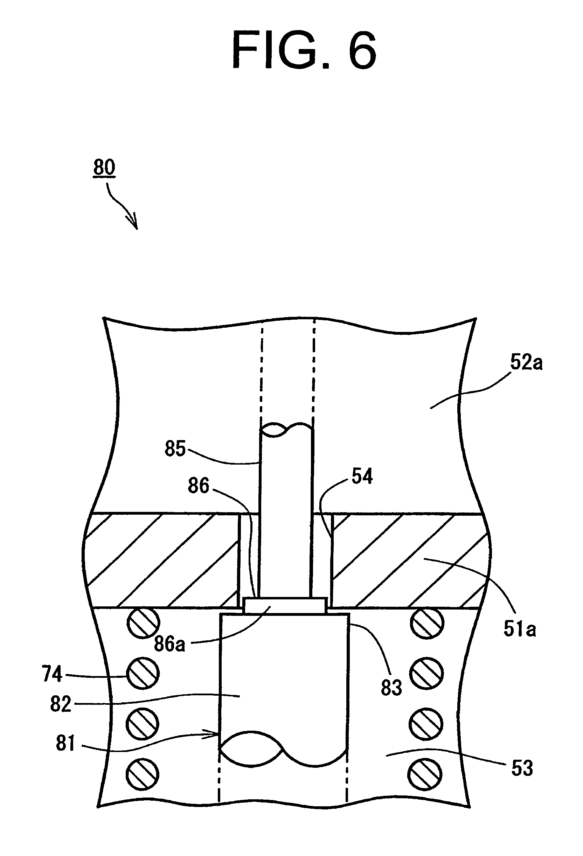

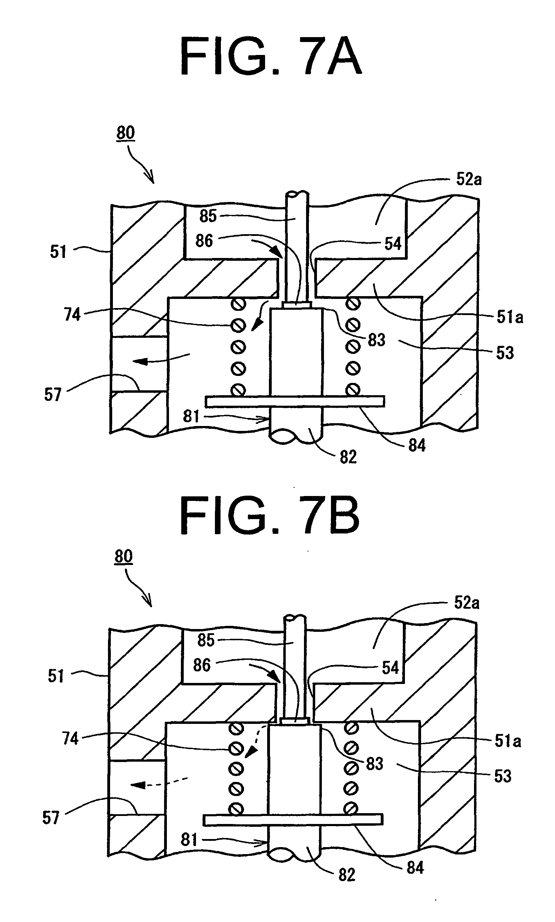

The displacement control valve 50 of the present embodiment has the following advantageous effects.
(1) Since the throttle portion 76 has the tapered surface 76a that is tapered from the first shaft portion 71 toward the second shaft potion 75, when the rod 70 is moved in the direction that causes the valve hole 54 to be closed thereby to insert a part of the throttle portion 76 into the valve hole 54, a part of the cross sectional area of the flow path is gradually decreased by the throttle portion 76. Therefore, the flow rate of the refrigerant flowing from the first pressure sensing chamber port 55 toward the valve chamber port 57 through the valve hole 54 is throttled in accordance with the position of the tapered surface 76a in the valve hole 54 thereby to stably sufficiently suppress the flow rate of the refrigerant. Thus, even when the throttle portion 76 has the tapered surface 76a, the increase of the distance of movement of the rod 70 is suppressed and at the same time controllability in a control region in which displacement of the compressor 10 is varied is reliably maintained.
(2) Since the first shaft portion 71, the second shaft portion 75 and the throttle portion 76 are integrally manufactured as a unit to form the rod 70, the reciprocation body is more easily processed and manufactured compared to the case where they are separately manufactured to form the reciprocation body. In addition, the number of parts is decreased.
(3) Since the axial length of the throttle portion 76 is set to be shorter than the distance of movement of the rod 70, there is no need to set the distance of movement of the rod 70 in accordance with the axial length of the throttle portion 76. Therefore, the exciting force of the solenoid that causes the movement of the rod 70 is reduced thereby to enable saving of the electric power of the solenoid 66 and reduction of the size of the solenoid 66, for example.
(4) When the refrigerant is carbon dioxide, the difference of elevation of the pressure of the refrigerant becomes remarkable compared to that of the other refrigerant. This enables a sufficient flow rate of the refrigerant to be flowed into the valve hole 54 by slightly spacing the valve body 72 away from the valve hole 54. In the state where the valve body 72 closes the valve hole 54, when the valve body 72 is spaced away from the partition 51a to begin to open the valve hole 54, the clearance between the tapered surface 76a and the valve hole 54 is sufficiently reduced thereby to suppress the rapid change of the flow rate of the refrigerant. At the same time, as the valve body 72 opens the valve hole 54, the throttle portion 76 enables the flow rate of the refrigerant flowing from the discharge pressure region into the control pressure chamber 16 to be gradually increased in accordance with the position of the tapered surface 76a in the valve hole 54 thereby to stably change the flow rate of the refrigerant which passes through the valve hole 54.
(5) Since the throttle portion 76 is removed from the valve hole 54 while the compressor 10 is operated at its minimum displacement, the flow rate of the refrigerant is not suppressed. That is, since the flow rate of the refrigerant is ensured by the large clearance between the outer circumferential surface of the second shaft portion 75 and the inner circumferential surface of the valve hole 54, the lubrication in the compressor 10 is sufficiently performed.
   A displacement control valve according to a second embodiment of the present invention will now be described with reference to FIGS. 6, 7A and 7B. Since most part of the displacement control valve of the second embodiment is common to the displacement control valve 50 of the first embodiment, the common or similar reference numerals of the first embodiment are applied to those of the second embodiment to incorporate the common or similar description of the first embodiment into that of the second embodiment. As shown in FIG. 6, a displacement control valve 80 of the second embodiment differs from that of the first embodiment in the shape of a throttle portion 86 of a rod 81. The throttle portion 86 of the present embodiment has a cylindrical shape which has a circumferential surface 86a parallel to the direction that causes movement of the rod 80. The throttle portion 86 is integrally formed with the first shaft portion 82 and the second shaft portion 85 to form a part of the rod 81. The throttle portion 86 is coaxial with the first shaft portion 82 and the second shaft portion 85, and is interposed between the first shaft portion 82 and the second shaft portion 85. The diameter of the end of the throttle portion 86 adjacent to the second shaft portion 85 is set larger than that of the second shaft portion 85.
   The diameter of the throttle portion 86 is set smaller than the inside diameter of the valve hole 54. As shown in FIG. 7B, in the state where the throttle portion 86 is inserted in the valve hole 54, a slight clearance is formed between the circumferential surface 86a which is the outside surface of the throttle portion 86 and the inside surface of the valve hole 54. On the other hand, as shown in FIG. 7A, in the state where the throttle portion 86 is removed from the valve hole 54, the flow path is formed between the valve hole 54 and the second shaft portion 85 thereby to enable a sufficient amount of refrigerant to flow into the flow path as is the case of the first embodiment. The axial length of the throttle portion 86 is set to be shorter than the maximum distance of movement of the rod 81. It is noted that the maximum distance of movement of the rod 81 is provided by the position of the rod 81 where the movable core 68 is spaced away from the fixed core 67 to the maximum and the position of the rod 81 where the movable core 68 is approached to the fixed core 67 to the maximum as is the case of the first embodiment. The throttle portion 86 serves as a throttle in the flow path to suppress the flow rate in the flow path. In addition, since the diameter of the throttle portion 86 is maintained at a constant length, maintenance of suppression of the flow rate by the throttle and release from the suppression are switched by inserting the throttle portion 86 into the valve hole 54 or removing the throttle portion 86 from the valve hole 54.
   The displacement control valve of the present embodiment has the following effects in addition to the effects (3) and (5) of the first embodiment.
(6) When the rod 81 is moved in the direction that causes the valve hole 54 to be closed thereby to insert a part of the throttle portion 86 into the valve hole 54, a part of the cross sectional area of the flow path is immediately decreased by the throttle portion 86. Therefore, the flow rate of the refrigerant flowing from the first pressure sensing chamber port 55 toward the valve chamber port 57 through the valve hole 54 is throttled by the throttle portion 86 in the valve hole 54 thereby to sufficiently suppress the flow rate of the refrigerant. Thus, controllability in a control region in which displacement of the compressor 10 is varied is reliably maintained.
(7) Since the first shaft portion 82, the second shaft portion 85 and the throttle portion 86 are integrally manufactured as a unit to form the rod 81, the reciprocation body is more easily processed and manufactured compared to the case where the reciprocation body including a projection member which has the conventional tapered surface is manufactured.
(8) When the refrigerant is carbon dioxide, the difference of elevation of the pressure of the refrigerant becomes remarkable compared to that of the other refrigerant. This enables a sufficient flow rate of the refrigerant to be flowed into the valve hole 54 by slightly spacing the valve body 83 away from the valve hole 54. When the rod 81 is moved in the direction that causes the valve hole 54 to be closed thereby to insert a part of or the entirety of the throttle portion 86 into the valve hole 54, the amount of the refrigerant flowing from the discharge pressure region to the control pressure chamber 16 is reliably decreased by the throttle portion 86 thereby to reliably suppress the flow rate of the refrigerant which passes through the valve hole 54.

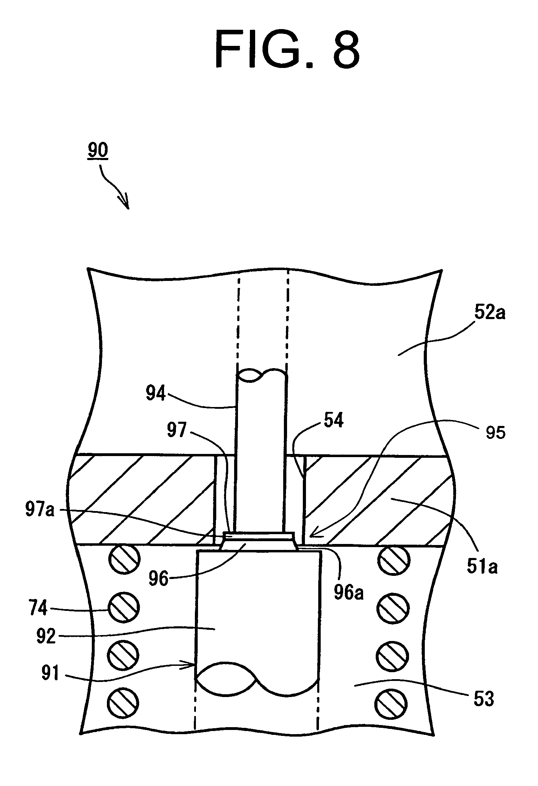

A displacement control valve according to a third embodiment of the present invention will now be described with reference to FIG. 8. Since most part of the displacement control valve of the third embodiment is common to the displacement control valve 50 of the first embodiment, the common or similar reference numerals of the first embodiment are applied to those of the third embodiment to incorporate the common or similar description of the first embodiment into that of the third embodiment. As shown in FIG. 8, a displacement control valve 90 of the third embodiment has a rod 91 which has a throttle portion 95 that differs from the throttle portions 76, 86 of the first and second embodiments. The throttle portion 95 of the present embodiment has a truncated-cone shaped first throttle portion 96 adjacent to a first shaft portion 92 and a cylindrical second throttle portion 97 adjacent to a second shaft portion 94. The second throttle portion 97 has a circumferential surface 97a parallel to the direction that causes movement of the rod 91. The throttle portion 95 has a composite shape by a combination of the first throttle portion 96 and the second throttle portion 97.

The throttle portion 95 is coaxial with the first shaft portion 92 and the second shaft portion 94, and is interposed between the first shaft portion 92 and the second shaft portion 94. The first throttle portion 96 is tapered from the first shaft portion 92 toward the second shaft portion 94. Therefore, the first throttle portion 96 has the tapered surface 96a so as to be tapered from the first shaft portion 92 toward the second shaft portion 94. The second throttle portion 97 extends from the first throttle portion 96 toward the second shaft portion 94 with the same diameter. The diameter of the second throttle portion 97 is set larger than that of the second shaft portion 94. The throttle portion 95 is integrally formed with the first shaft portion 92 and the second shaft portion 94 to form a part of the rod 91.

In the displacement control valve 90 of the present embodiment, the control of the flow rate caused by the throttle portion 95 is a fixed control of the flow rate caused by the operation of the circumferential surface 97a of the second throttle portion 97 in the state where only the second throttle portion 97 is inserted in the valve hole 54. The control of the flow rate caused by the throttle portion 95 is a movable control of the flow rate caused by the operation of the tapered surface 96a of the first throttle portion 96 in the state where the first throttle portion 96 is inserted in the valve hole 54. That is, the operation of the control of the flow rate caused by the throttle portion 95 is switched in accordance with the position of the insertion of the first throttle portion 96 and the second throttle portion 97 into the valve hole 54. The present embodiment has a part of the effects (6), (8) of the second embodiment in addition to the effects (1), (3), (4) of the first embodiment.

The present invention is not limited to the first through third embodiments, but may be variously modified within the scope of the invention. For example, the above embodiments may be modified as follows.

In each of the embodiments, the displacement control valve has the pressure sensing mechanism caused by the pressure difference between the upstream circuit and the downstream circuit on the discharge side of the discharge pressure region. However, the present invention may be applicable to a displacement control valve which has a pressure sensing mechanism caused by the pressure difference between the discharge pressure region and the suction pressure region. Alternatively, the present invention may also be applicable to a displacement control valve which has a pressure sensing mechanism caused by the pressure difference between the discharge pressure region and a control pressure region. In these cases, it is preferable that a refrigerant passage or a necessary chamber is added to the displacement control valve in accordance with the arrangement of the pressure sensing chamber and the valve chamber.

In each of the embodiments, although the throttle is provided in the external refrigerant circuit to separate the upstream circuit from the downstream circuit, the throttle may be provided in the outlet to introduce the refrigerant upstream from the discharge chamber or the throttle in the outlet into the high-pressure chamber in the control valve and to introduce the refrigerant downstream from the throttle in the outlet or in the discharge pressure region in the external refrigerant circuit into the low-pressure chamber in the control valve.

In each of the embodiments, although the displacement control valve allows the refrigerant in the discharge pressure region to flow into the control pressure chamber or prevents the refrigerant in the discharge pressure region from flowing into the control pressure chamber, the present invention is applicable to the displacement control valve which includes at least a passage which enables the refrigerant in the discharge pressure region to flow into the control pressure chamber. For example, the displacement control valve may be a three-way valve which includes a passage which enables the refrigerant in the discharge pressure region to flow into the control pressure chamber.

In each of the embodiments, although the type of the refrigerant is not specified, the type of the refrigerant is not specifically required. For example, the use of fluorocarbon-based gas or carbon dioxide is preferable. The refrigerant may be gas or liquid.

Therefore, the present examples and embodiments are to be considered as illustrative and not restrictive, and the invention is not to be limited to the details given herein but may be modified within the scope of the appended claims.

A displacement control valve includes a reciprocation body which has a valve body. The reciprocation body includes a first shaft portion that has the valve body and a second shaft portion that is coaxial with the first shaft portion and inserted in a valve hole. The first shaft portion is located adjacent to a solenoid. The second shaft portion is connected to a pressure sensing mechanism. The second shaft portion and the valve hole define a flow path in which refrigerant freely flows. A throttle portion is formed between the first and second shaft portions and coaxial with the first and second shaft portions. Diameter of an end of the throttle portion adjacent to the second shaft portion is set larger than that of the second shaft portion adjacent to the throttle. Flow rate of the refrigerant in the flow path is suppressed by the throttle portion.

## Claims

1. A clutchless type variable displacement compressor (10) connected to an external refrigerant circuit (42), the compressor comprising a displacement control valve (50, 80, 90) and a control pressure chamber (16), the compressor (10) and the external refrigerant circuit (42) having a discharge pressure region, the displacement control valve (50, 80, 90) comprising a first port (55) in communication with the discharge pressure region, a second port (57) in communication with the control pressure chamber (16), a refrigerant passage connecting the first port (55) to the second port (57), a valve hole (54) provided in the refrigerant passage, a reciprocating body (70) having a valve body (72) for opening the valve hole (54) by being spaced away from a partition wall (51a) through which the valve hole (54) is formed, and closing the valve hole (54) by contacting with the partition wall (51a), a pressure sensing mechanism (62) for moving the reciprocating body (70) in a direction that causes the valve hole (54) to be opened in accordance with pressure in the discharge pressure region and a solenoid (66) for urging the reciprocating body (70) in a direction that causes the valve hole (54) to be closed,
wherein
the reciprocating body (70) includes a first shaft portion (71) that has the valve body (72) and a second shaft portion (75) that is coaxial with the first shaft, portion (71) and inserted in the valve hole (54), wherein the first shaft portion (71) is located adjacent to the solenoid, in that the second shaft portion (75) is connected to the pressure sensing mechanism (62), wherein the second shaft portion (75) and the valve hole (54) define a flow path in which refrigerant freely flows, wherein a throttle portion (76) is formed between the first (71) and second (75) shaft portions and coaxial with the first (71) and second (75) shaft portions, **characterized in that** the throttle portion (76) is insertable into the valve hole (54) when the reciprocating body (70) is reciprocated, **in that** diameter of an end of the throttle portion (76) is set larger than that of the second shaft portion (75) adjacent to the throttle portion (76), and **in that** flow rate of the refrigerant in the flow path is suppressed by the throttle portion (76).

2. The compressor (10) according to claim 1, wherein the throttle portion (76) has a tapered surface (76a) that is tapered from the first shaft portion (71) toward the second shaft portion (75).

3. The compressor (10) according to claim 1 or 2, wherein the throttle portion (86) has a circumferential surface (86a) that is parallel to a direction of movement of the reciprocating body (81).

4. The compressor (10) according to any one of claims 1 through 3, wherein the first (71) and second (75) shaft portions and the throttle portion (76) are formed integrally with each other.

5. The compressor (10) according to any one of claims 1 through 4, wherein an axial length of the throttle portion (76) is set to be shorter than a maximum distance of movement of the reciprocating body (70).

6. The compressor (10) according to any one of claims 1 through 5, wherein the refrigerant is carbon dioxide.

7. The compressor (10) according to any one of claims 1 through 5, wherein the refrigerant is fluorocarbon-based gas.

8. The compressor (10) according to any one of claims 1 through 7, wherein a radial step exists at the boundary of the throttle portion (76) and the second shaft portion (75), and the throttle portion (76) and the radial step are located in the valve hole (54) when the valve hole (54) is fully closed and are located beyond the valve hole (54) when the valve hole (54) is fully opened.

## Patentansprüche

1. Kupplungsloser Verdichter mit variabler Verdrängung (10), der mit einem externen Kühlmittelkreislauf (42) verbunden ist, wobei der Verdichter ein Verdrängungssteuerventil (50, 80, 90) und eine Steuerdruckkammer (16) aufweist, wobei der Verdichter (10) und der externe Kühlmittelkreislauf (42) einen Auslassdruckbereich aufweisen, wobei das Verdrängungssteuerventil (50, 80, 90) einen ersten Anschluss (55), der mit dem Auslassdruckbereich in Verbindung ist, einen zweiten Anschluss (57), der mit der Steuerdruckkammer (16) in Verbindung ist, einen Kühlmittelkanal, der den ersten Anschluss (55) mit dem zweiten Anschluss (57) verbindet, ein Ventilloch (54), das in dem Kühlmittelkanal vorgesehen ist, einen sich hin und her bewegenden Körper (70) mit einem Ventilkörper (72) zum Öffnen des Ventillochs (54), indem er von einer Trennwand (51a) beabstandet ist, durch die das Ventilloch (54) ausgebildet ist, und zum Schließen des Ventillochs (54), indem er mit der Trennwand (51a) in Kontakt ist, einen Druckerfassungsmechanismus (62) zum Bewegen des sich hin und her bewegenden Körpers (70) in einer Richtung, die das Öffnen des Ventillochs (54) gemäß einem Druck in dem Auslassdruckbereich bewirkt, und einen Solenoid (66) zum Drücken des sich hin und her bewegenden Körpers (70) in einer Richtung aufweist, die das Schließen des Ventillochs (54) bewirkt,
wobei der sich hin und her bewegende Körper (70) einen ersten Wellenabschnitt (71), der den Ventilkörper (72) aufweist, und einen zweiten Wellenabschnitt (75) aufweist, der koaxial zu dem ersten Wellenabschnitt (71) ist und in dem Ventilloch (54) eingefügt ist, wobei der erste Wellenabschnitt (71) angrenzend an dem Solenoid angeordnet ist, der zweite Wellenabschnitt (75) mit dem Druckerfassungsmechanismus (62) verbunden ist, wobei der zweite Wellenabschnitt (75) und das Ventilloch (54) einen Strömungspfad definieren, in dem ein Kühlmittel frei strömt, wobei ein Drosselabschnitt (76) zwischen dem ersten (71) und dem zweiten (75) Wellenabschnitt ausgebildet ist und koaxial zu dem ersten (71) und dem zweiten (75) Wellenabschnitt ist, **dadurch gekennzeichnet, dass** der Drosselabschnitt (76) in das Ventilloch (54) einfügbar ist, wenn sich der sich hin und her bewegende Körper (70) hin und her bewegt, dass ein Durchmesser von einem Ende des Drosselabschnitts (76) so festgelegt ist, dass er größer als ein Durchmesser des zweiten Wellenabschnitts (75) angrenzend an dem Drosselabschnitt (76) ist, und dass eine Durchsatzrate des Kühlmittels in dem Strömungspfad durch den Drosselabschnitt (76) vermindert wird.

2. Verdichter (10) gemäß Anspruch 1, wobei der Drosselabschnitt (76) eine abgeschrägte Fläche (76a) aufweist, die von dem ersten Wellenabschnitt (71) zu dem zweiten Wellenabschnitt (75) abgeschrägt ist.

3. Verdichter (10) gemäß Anspruch 1 oder 2, wobei der Drosselabschnitt (86) eine Umfangsfläche (86a) aufweist, die parallel zu einer Bewegungsrichtung des sich hin und her bewegenden Körpers (81) ist.

4. Verdichter (10) gemäß einem der Ansprüche 1 bis 3, wobei der erste (71) und der zweite (75) Wellenabschnitt und der Drosselabschnitt (76) einstückig miteinander ausgebildet sind.

5. Verdichter (10) gemäß einem der Ansprüche 1 bis 4, wobei eine axiale Länge des Drosselabschnitts (76) so festgelegt ist, dass sie kürzer als eine maximale Bewegungsdistanz des sich hin und her bewegenden Körpers (70) ist.

6. Verdichter (10) gemäß einem der Ansprüche 1 bis 5, wobei das Kühlmittel Kohlendioxid ist.

7. Verdichter (10) gemäß einem der Ansprüche 1 bis 5, wobei das Kühlmittel ein fluorkohlenstoff-basiertes Gas ist.

8. Verdichter (10) gemäß einem der Ansprüche 1 bis 7, wobei ein radialer Absatz an dem Grenzbereich des Drosselabschnitts (76) und des zweiten Wellenabschnitts (75) vorhanden ist, und der Drosselabschnitt (76) und der radiale Absatz in dem Ventilloch (54) angeordnet sind, wenn das Ventilloch (54) vollständig geschlossen ist, und wobei sie jenseits des Ventillochs (54) angeordnet sind, wenn das Ventilloch (54) vollständig geöffnet ist.

## Revendications

1. Compresseur à déplacement variable du type sans embrayage (10) raccordé à un circuit de réfrigérant extérieur (42), le compresseur comprenant une soupape de commande de déplacement (50, 80, 90) et une chambre de pression de commande (16), le compresseur (10) et le circuit de réfrigérant extérieur (42) ayant une région de pression de refoulement, la soupape de commande de déplacement (50, 80, 90) comprenant un premier orifice (55) en communication avec la région de pression de refoulement, un deuxième orifice (57) en communication avec la chambre de pression de commande (16), un passage de réfrigérant raccordant le premier orifice (55) au deuxième orifice (57), un trou de soupape (54) fourni dans le passage de réfrigérant, un corps à mouvement alternatif (70) ayant un corps de soupape (72) permettant d'ouvrir le trou de soupape (54) en étant espacé d'une paroi de séparation (51a) par l'intermédiaire de laquelle le trou de soupape (54) est formé, et fermer le trou de soupape (54) en entrant en contact avec la paroi de séparation (51a), un mécanisme de détection de la pression (62) permettant de déplacer le corps à mouvement alternatif (70) dans une direction qui provoque l'ouverture du trou de soupape (54) en fonction de la pression dans la région de pression de refoulement et un solénoïde (66) destiné à pousser le corps à mouvement alternatif (70) dans une direction qui provoque la fermeture du trou de soupape (54), dans lequel
le corps à mouvement alternatif (70) inclut une première portion d'arbre (71) qui possède le corps de soupape (72) et une seconde portion d'arbre (75) qui est coaxiale avec la première portion d'arbre (71) et insérée dans le trou de soupape (54), dans lequel
la première portion d'arbre (71) est située adjacente au solénoïde, en ce que la seconde portion d'arbre (75) est raccordée au mécanisme de détection de la pression (62), dans lequel la seconde portion d'arbre (75) et le trou de soupape (54) définissent un chemin d'écoulement dans lequel le réfrigérant s'écoule librement, dans lequel une portion d'étranglement (76) est formée entre la première (71) et la seconde (75) portions d'arbre et coaxiale avec la première (71) et la seconde (75) portions d'arbre, **caractérisé en ce que** la portion d'étranglement (76) peut être insérée dans le trou de soupape (54) lorsque le corps à mouvement alternatif (70) effectue un mouvement alternatif, **en ce que** le diamètre d'une extrémité de la portion d'étranglement (76) est défini pour être plus grand que celui de la seconde portion d'arbre (75) adjacente à la portion d'étranglement (76), et **en ce que** le débit du réfrigérant dans le chemin d'écoulement est supprimé par la portion d'étranglement (76).

2. Compresseur (10) selon la revendication 1, dans lequel la portion d'étranglement (76) présente une surface effilée (76a) qui est effilée à partir de la première portion d'arbre (71) vers la seconde portion d'arbre (75).

3. Compresseur (10) selon la revendication 1 ou 2, dans lequel la portion d'étranglement (86) présente une surface de circonférence (86a) qui est parallèle à une direction de mouvement du corps à mouvement alternatif (81).

4. Compresseur (10) selon l'une quelconque des revendications 1 à 3, dans lequel la première (71) et la seconde (75) portions d'arbre et la portion d'étranglement (76) sont formées en une seule pièce.

5. Compresseur (10) selon l'une quelconque des revendications 1 à 4, dans lequel une longueur axiale de la portion d'étranglement (76) est définie pour être plus courte qu'une distance maximum d'un mouvement du corps à mouvement alternatif (70).

6. Compresseur (10) selon l'une quelconque des revendications 1 à 5, dans lequel le réfrigérant est du dioxyde de carbone.

7. Compresseur (10) selon l'une quelconque des revendications 1 à 5, dans lequel le réfrigérant est un gaz à base de fluorocarbone.

8. Compresseur (10) selon l'une quelconque des revendications 1 à 7, dans lequel un épaulement radial existe à la limite de la portion d'étranglement (76) et la seconde portion d'arbre (75), et la portion d'étranglement (76) et l'épaulement radial sont situés dans le trou de soupape (54), lorsque le trou de soupape (54) est totalement fermé et sont situés au-delà du trou de soupape (54) lorsque le trou de soupape (54) est totalement ouvert.
